Europäisches Patentamt

European Patent Office    (11) Publication number: **0 010 813**
**A1**

Office européen des brevets

(19)

(12) **EUROPEAN PATENT APPLICATION**

(21) Application number: **79200624.9**    (51) Int. Cl.³: **H 04 N 7/12**

(22) Date of filing: **26.10.79**

(30) Priority: **27.10.78 NL 7810759**    (71) Applicant: **Videophone Automatic Systems B.V., Glipperweg 35-37, NL-2104 AH Heemstede (NL)**

(43) Date of publication of application: **14.05.80 Bulletin 80/10**    (72) Inventor: **Van Herk, Gerard, Melkweg 8, NL-9718 ES Groningen (NL)**

(74) Representative: **Urbanus, Henricus Maria, Ir. et al, c/o Vereenigde Octrooibureaux Nieuwe Parklaan 107, NL-2587 BP 's-Gravenhage (NL)**

(84) Designated Contracting States: **AT BE CH DE FR GB IT LU SE**

(54) **A system for transmitting visual information via a low-frequency system, such as a telephone system.**

(57)    A system for transmitting visual information via a low frequency system, such as a telephone system (6), provided with at least two sections, each being adapted to operate both as transmitter and as receiver and being adapted to be coupled to each other via the low frequency system. Each section is an integral unit provided with an image pick-up camera (1), a device (2) connected therewith for converting high frequency video signals into low frequency audio signals or vice versa, an image display device (3) connected to that device, an acoustic coupling device (5) connected to the converter (2) for effecting a connection of the relevant section to the low frequency system (6), and a control processor (7, 8, 9, 10, 11) for controlling according to a given program all switching operations required for the operation of the system.

A system for transmitting visual information via a low-frequency system, such as a telephone system.

In practice many cases occur wherein it is desirable and important to transmit images or other visual information in short time and inexpensively over large distances.

A number of proposals have already been made to realize this idea. In one of these proposals, wherein it is the object to transmit images via a telephone system, use is made of a so-called "slow scan" television or SSTV converter. Thereby the high frequency video signals originating from a television camera are converted into low frequency audio signals which may then be transmitted via a speech communication channel, such as a telephone line. After reception in the receiving station the frequency-modulated signal is then demodulated and by means of a digital image memory is again converted into video signals and is reproduced.

For realizing this principle in practice a great many switching operations are to be carried out, such as the connection of the converter to the telephone system, the introduction of the image transfer and the restoration of the normal speech communication. Furthermore the receiving station is to be instructed that the apparatus present therein should be prepared for reception, viz. at the proper point of time, that the image reception should be awaited and that switchback should take place to the speech communication condition.

It has been found that such a realization entails difficulties precisely by this large number of switching operations and partly on account of this, at least at present, is still in a substantially experimental stage.

It is the object of the invention to provide an apparatus for which the above object, viz. the transmission of visual information via a low frequency system, such as a telephone system, can be effected in a relatively simple and elegant way in practice.

To this effect the system according to the invention comprises at least two sections, which each are adapted to operate both as transmitter and as receiver and may be interconnected via the low frequency system, whereby each section is an integral unit provided with an image pick-up camera, an apparatus connected therewith to convert high frequency video signals into low frequency audio signals and vice versa, an image reproducing device connected therewith, an acoustic coupling device connected to the converter for effecting a connection of the pertinent section to the low frequency system and a control processor for controlling according to a given program all switching operations required for the operation of the system.

The invention will now be explained, by way of example, with reference to the accompanying drawing, wherein:

Fig. 1 is a block diagram of a section of a system according to the invention; and

Fig. 2 a block diagram showing in more detail the parts of the control processor in the various functions of the system.

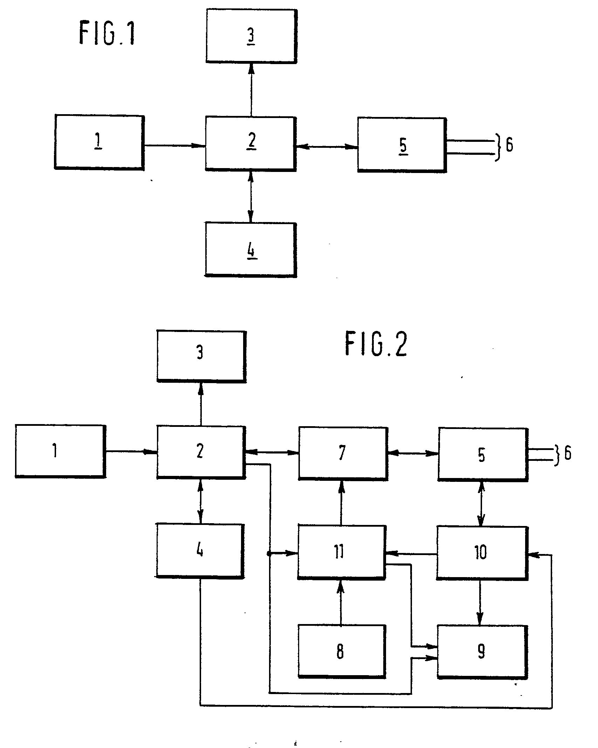

As shown in Fig. 1 each section of a system according to the invention comprises an image pick-up camera 1, the output of which is connected to a converter 2. To said converter 2 is furthermore connected an image reproducing device 3 and possibly an audio recording and reproducing device 4.

The output of the converter may be connected via an acoustic coupling device 5 to a telephone system diagrammatically indicated at 6.

All above mentioned parts, viz. the pick-up device, the converter, the image reproducing device, the acoustic coupling device and possibly the recording and reproducing device, are accommodated in a single unit and are all controlled by an automatic processor not indicated in the block diagram, said processor executing all sequential switching operations according to a pre-selected program.

The influencing of the switches disposed in the processor of each section is effected by means of special control signals which are transmitted via the low frequency system, in casu the telephone system, as will be explained later on.

By using the automatic control processor it is possible to simplify the above parts of a section and to integrate the same by logic means in a compact unit for image transfer and reproduction. The automatic control processor and the acoustic coupling device enable a mobile design of each section and a connection to any normal telephone system without special professional knowledge being required to operate the system.

Since according to the invention no use is made of selective frequencies, the number of sections associated with a system may be randomly extended.

The following is observed regarding the functioning of the system.

The system according to the invention allows four modes of operation. In the first place a voice communication whereby by means of the image display device a live display is possible in a section from an associated image recording device.

A second mode of operation is the one wherein an image transmission takes place. In this case the voice communication is interrupted, the image of the recording device of a section is "frozen" and transmitted in a given interval of e.g. 8 sec. to one or more other sections. In this mode use may be made of control signals preceding the image signals in order to switch the receiving section to the reception mode thereof.

After completion of the transmission, the voice communication is restored and the transmitted image remains "frozen" on the image display device of the relevant sections.

A third mode is the one wherein a recording takes place. In this case it is possible to record image information and voice both in the recording device. This image information and voice may originate from the own section, viz. comprise own pictures with comments, or may originate from a transmitting section, whereby the images may be recorded with the spoken word and the explanation from this section.

In the fourth mode a display takes place. The images are transmitted to the converter and display device. The images may thereafter, if desired, be transmitted to other sections. The recorded conversation and comments may then be simultaneously heard via a normal telephone receiver.

Besides the above described normal modes of operation, the processor according to the invention is furthermore so designed that another three special modes of operation are possible. These comprise: a high quality transmission which is employed when the quality of the telephone system is marginal or when a maximal image resolution is required. For this purpose a low transmission frequency of e.g. 80 sec/image is chosen.

A second special mode of operation is the back transmission or "echo". If a transmitting section deems it necessary to check the quality of the transmitted image, the receiving section transmits the received image back to the other transmitter ("echo"). It will be clear that in this special mode of operation the "echo" image has been degraded twice by the transmission process.

The third special mode of operation is the one wherein by means of the system according to the invention, instead of single images, continuous images are transmitted. In this special mode of operation the transmitter section need not be manned. The transmitter section in this case may be a remote section, the situation of which has to be continuously checked, which for instance is the case with a meter, an indicator or the like.

For all functions which have to be performed in the normal and special modes of operation, a large number of different switching operations in different sequences are required. Instead of influencing the switches required therefor by hand in the proper sequence, these operations according to the invention are performed while using a series of relays in the automatic control processor. These relays, which effect and disconnect electric contacts between the various parts, are controlled by logic means by various sub-programs. Thereby each sub-program represents the switching sequence for a given function.

With different functions sometimes a specific condition has to be met before the switching sequence may be continued; for instance the point of time when the complete image is received should be awaited, after which the video transmission is completed and again switched back to the voice communication.

According to the invention these conditions are checked by means of specific control signals.

In deviation from the case in which an operator has to wait for the point of time when a given situation occurs, in the system according to the invention this situation is established by the processor, which processor then automatically proceeds with the next step of the operation.

The control signals are chosen so that they do not disturb the voice or video transmission and cannot be generated unintentionally either.

The programs on the basis of which the system performs its functions are stored in a continuous memory and are selected either by pushing a function key or automatically by control signals from a different system.

Thereby each next step in the program entails either a direct or a remote-controlled switching. The subsequent step is only introduced after the preceding operation has been confirmed as completed.

In Fig. 2 is shown a more detailed block diagram of a section of a system according to the invention, wherein likewise the various functions are indicated.

The converter 2, as indicated in Fig. 1, is coupled with an image pick-up device 1, an image display device 3 and possibly an audio recording and reproducing device 4. The converter may comprise a memory of 65 kbits, which may contain the image information of 128 x 128 bit elements with 16 intensity levels (4 bits). The memory is both accessible to fast scan, i.e. a television image repetition frequency of 25/sec. and slow scan of e.g. 8 sec/image.

During the continuous fast scan, the digital contents of the memory are converted into analog video signals and, as already explained in the above, displayed in the display device 3. For transmitting the image over the telephone system, indicated at 6, low frequency scanning of the memory takes place. The information per image element is then converted to a low frequency analog signal. This audio signal is thereafter frequency modulated in a range of 1200-2400 Hz from black to white and transmitted as a series of tones over the telephone system.

The converter 2, as further appears from Fig. 2, is coupled with a plurality of parts which together constitute the processor. These parts are a switching unit 7 with relays for effecting, respectively disconnecting electric contacts, a user control panel 8 having push buttons and switches, a signalling unit 9 with indicators which indicate the condition of the processor, peripheral equipment 10, which determines and transmits control signals from and to the telephone system and the recording-display device, and finally the control program memory 11 wherein the pre-programmed series of steps for each given function for the system is stored.

In the figure the various supply and discharge directions of the signals are indicated by means of arrows between different parts.

Of the above mentioned functions, which may be performed with the system according to the invention, a number are realized by means of push buttons, viz. reset, receive, transmit, tape playback, tape record. Thereby the receiving function is effected by a control signal from the transmitter when a function should take place, and the sub-program in question is introduced into the control program memory and all required steps are performed sequentially.

These steps comprise inter alia a switching of the relays and a transmission of control signals to the peripheral equipment and the signalling device.

In the system according to the invention in total four control signals are generated in specific situations for different purposes:

an LLD (last line detected) signal which is generated when the 128th line of an image is (slow) scanned in order to separate the images from the continuous signal, which control signal is applied in all operations of the system;

a BTT (begin of tape transmission) signal, which is generated during the 5/8th part of the image scanning and whereby the transmission of an image from the tape over the telephone is introduced; a BOR (begin of receive) signal, which is generated by the transmitter by means of a push button, so that the control processor in the receiving section is prepared for the reception of an image; and a BOB (begin of block) signal, which is generated via a recording push button and whereby a high frequency tone is recorded in the recording and reproducing device in order to indicate the recording of an image.

The BOB and BOR signals are high frequency tones, while the LLD and BTT signals comprise a single logic pulse.

Consequently there is obtained according to the invention an integrated automatic system for transmitting still (television) images over a low frequency system, such as a telephone system, whereby each section of the system comprises a compact unit of a plurality of parts; moreover this results in that a portable instrument is produced which may be connected to any existing telephone system in a simple manner, without requiring special conditions to be met.

The system may be applied in different manners in those situations wherein visual information is essential for transmitting an "image". Examples thereof can be found in a transmission of X-ray radiographs between hospitals or departments of hospitals or between a hospital and a remote physician, the transmission of technical drawings or graphic results between a main station and a remote location, the transmission of signatures or identity photographs between banks or police stations; the transmission of the face of subscribers during a personal conversation, and during the checking of a situation such as a meter or the entrance of a building by a security guard.

It will be clear that the invention is not restricted to
the above described embodiment and the above applications.

## CLAIMS

1.        A system for transmitting visual information via a low frequency system, such as a telephone system, characterized by at least two sections, each being adapted to operate both as transmitter and as receiver and adapted for being coupled to each other via the low frequency system, each section being an integral ·unit . which is provided with an image pick-up camera, a device connected therewith for converting high frequency video signals into low frequency audio signals or vice versa, an image display device connected to the latter device, an acoustic coupling device connected to the converter for effecting a connection of the relevant section with the low frequency system, and a control processor for controlling according to a given program all switching operations required for the operation of the system.

2.        A system according to claim 1, characterized in that in each section the converter is further connected to an audio recording and reproducing device.

3.        A system according to claim 1, 2, characterized in that the control processor is provided with a switching unit for effecting a direct electric contact or the disconnection thereof, a user control panel having push buttons and switches, a signalling unit having indicators which indicate  the state of the processor, peripheral equipment for determining and transmitting control signals from and to the low frequency system and/or the recording and reproducing device, and a processor program memory for storing the programs associated with the sequence of operations required for each specific function of the system.

4.        A system according to claim 1, characterized in that the converter is a so-called SSTV converter.

5.        A system according to claims 1-4, characterized in that the selection of a given program in a section takes place either by influencing a function key or automatically by means of control signals from a different section of the system.

FIG.1

FIG.2

European Patent Office

**EUROPEAN SEARCH REPORT**

Application number

EP 79 20 0624

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FUNKSCHAU, vol. 44, no. 17, September 1972, page 612 München, DE. "Soft Video Fax - ein neues Video-Ubertragungssystem über Fernsprechleitungen" <br><br> * Column in the middle; line 3 - right-hand column, last paragraph * <br><br> -- | 1,4 | H 04 N 7/12 |
| | DE - A - 2 813 973 (SCHRAAF) <br> * Page 3, line 1 - page 5, line 6 * <br><br> -- | 1,2,4 | TECHNICAL FIELDS SEARCHED (Int.Cl. 3) <br><br> H 04 N 7/00 |
| | TECHNISCHE RUNDSCHAU, vol. 65, no. 27, 26th June 1973, page 29 Bern, CH. M. GEMPELER: "Videovoice - System für Bild- und Sprachübertragung" <br><br> * Column 1, last paragraph - last column, fourth paragraph * <br><br> -- | 1,2,4 | |
| | FR - A - 2 374 796 (RICOH) <br> * Page 3, line 31 - page 8, line 1; page 9, line 15 - page 10, line 6 * <br><br> ---- | 1,3,5 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| X | The present search report has been drawn up for all claims | | &: member of the same patent family, corresponding document |

| Place of search | Date of completion of the search | Examiner |
|---|---|---|
| The Hague | 24-01-1980 | DE ROECK |

EPO Form 1503.1 06.78